# EUROPEAN PATENT SPECIFICATION

(11) **EP 2 064 947 B1**
(45) Date of publication and mention of the grant of the patent: **21.09.2011**
(21) Application number: 07121729.3
(22) Date of filing: 28.11.2007
(51) Int. Cl.: A01M 1/18, A01M 29/00, A01G 13/10

(54) **Caterpillar-trapping device**
Vorrichtung zur Verfolgung von Raupen
Dispositif de piégeage de chenilles

(43) Date of publication of application: 03.06.2009
(73) Proprietor: Haker, Knut, 07181 Portals Nous Mallorca (ES)
(72) Inventor: Haker, Knut, 07181 Portals Nous Mallorca (ES)

(56) References cited:
- DE-U1- 8 712 205
- FR-A- 340 741
- FR-A- 913 644
- US-A- 1 579 534

## Description

### OBJECT OF THE INVENTION

The present invention belongs to the field of agriculture, in particular, the specific field of animal capturing or trapping or pest destruction equipment.

The object of the invention is a caterpillar-trapping device positioned around the trunk of a tree in order to eliminate the larvae of species of insects that are harmful to said tree.

### BACKGROUND OF THE INVENTION

There are several species of lepidopteran insects that deposit their eggs in treetops, wherein their larvae (caterpillars) establish their nests. Said larvae feed on the leaves of the trees where they nest, causing their defoliation and damaging the trees themselves as they carry various infections and diseases. Furthermore, the caterpillars are covered in urticant hairs, which they shed and which float in the air, causing rashes and allergic reactions in humans during the time of year when the caterpillars come down to the ground to bury themselves and develop into chrysalises and, subsequently, butterflies.

The desire and need to exterminate said insects is therefore understandable.

One particular species of these insects is called the "pine processionary caterpillar" *(Thaumetopoea Pityocampa)* and it inhabits the pine, fir and cedar forests of central and southern Europe, where it is a very widespread plague.

Chemical methods of fighting the caterpillars using insecticides that inhibit the molting of the larvae have proved to be effective. However, the difficulty that they present is that the time of application is limited to the short period wherein the larvae molt. Added drawbacks of using insecticides and molting inhibitors are their strongly pollutant nature and their toxicity.

Another type of method used to eliminate the larvae is the type called physical-type methods, which include heating methods. However, this type of pest control method requires highly-qualified professionals and special protection equipment, which significantly increases the cost of application of said methods.

Another known method of protection against caterpillars that attack trees consists of producing an artificial path over the bark of the tree down the length of the trunk in a spiral or similar shape, at the end of which a receptacle is positioned. The idea is based on the caterpillars having to go down the length of the trunk following the artificial path and ending up trapped in the receptacle. Said method is not ideal, as not all the caterpillars or even a significant part of the colony that populate the tree are forced into a situation where they are inclined to follow the artificial path and end up trapped in the receptacle.

German Utility Model DE-U-87 12 205 describes a device for avoiding the climbing of little insects like ants or similar, to the tree tops, which comprises a ring-shaped piece containing water to trap the insects as they are climbing up or down.

US patent 1579534 describes a tree protector comprising a supporting casing adapted to surround a tree trunk and spaced therefrom and having a tapered upper portion forming a seat, a through fitting the seat, oil in the oil through and forming an insect barrier surrounding the tree trunk, and a cover for the oil through.

The technical problem that is posed consists of inventing a method whereby most of the caterpillars that attack trees can be effectively eradicated therefrom as they move from the treetops to the ground, without the need to use pollutant or harmful chemical products or expensive resources or highly-qualified professionals.

### DESCRIPTION OF THE INVENTION

The technical problem that is posed and the aforementioned drawbacks are satisfactorily overcome by using the object of the invention according to claim 1.

The invention has a ring-shaped piece with an open top section, equipped with a receptacle that contains a material wherein the caterpillars are trapped when they enter said receptacle. The chosen material should preferably be any viscous fluid, in particular water. The caterpillars that move down the trunk to the ground having recently left their nests enter the receptacle and are trapped therein. In a particular preferred case wherein the receptacle is filled with water, the caterpillars drown, although the embodiment of the invention is equivalent using any product that is viscous enough to trap the caterpillars.

The receptacle made from the ring-shaped piece can take different forms, including either of those given below:
1) At least one section of elastic material positioned around a tree trunk, the ends of which are connected, but this embodiment does not form part of the invention.
2) Two pieces of rigid material assembled around a tree trunk with a male-female connection according to the invention.

The elastic section or sections mentioned in the first possibility are connected by their free ends and this can be done using any known adhesive means and materials that are suitable for the conditions of use, regardless of the specific material. The preferable material of choice is silicone.

To ensure a certain degree of immobilisation and water-tightness, it may be advisable to additionally apply adhesive or sealing materials to the connection area.

Between the inner edge of the ring-shaped piece and the tree trunk there is an intermediate means of connection and/or filling means. Said intermediate means, as is explained below, can act as a connection between the ring-shaped piece and the tree or can simply act as a filler material.

Between the different possible means of connection of the ring-shaped piece and the tree, are considered elastic elements, among with a tension band will preferably be used. Said tension band is an elastic piece positioned around the tree trunk, pressing the inner face of the ring-shaped piece against said trunk like a belt.

As a filling means, it is possible to use products such as sand, pebbles and earth to fill in cavities and irregularities between the bark and the inner face of the ring-shaped piece. Additionally and alternatively, it is possible to fill in said cavities and irregularities with other materials, preferably with pieces of dampened cellulose paper.

The space between the inner face of the ring and the tree trunk, including the irregularities in the bark, may be filled in with various different materials, such as sand, pebbles or some kind of paste, together with the aid of dampened cellulose paper or any other material that fulfils the function of sealing it effectively.

### DESCRIPTION OF THE DRAWINGS

To complement this description and in order to aid a better understanding of the invention's characteristics, according to a preferred practical embodiment thereof, there is a set of illustrative and non-limiting drawings integral to said description, which are as follows:
Figure 1.- Shows a perspective view of the invention, wherein the caterpillar-trapping device can be seen installed on the ground at the foot of a tree.
Figure 2.- Shows a perspective view of the invention, wherein the two pieces that make up the caterpillar-trapping device can be seen, as well as the means by which they are assembled.
Figure 3.- Shows a side view of the invention, wherein the caterpillar-trapping device can be seen in cross-section cut along a plane containing the axis of said device.
Figure 4. Shows a perspective view according to an embodiment which is not part of the invention, wherein the caterpillar-trapping device can be seen attached to a tree and sealed with dampened cellulose paper.
Figure 5.- Shows a side view according to an embodiment which is not part of the invention, wherein the caterpillar-trapping device can be seen in cross-section cut along a plane containing the axis of said device.

### PREFERRED EMBODIMENT OF THE INVENTION

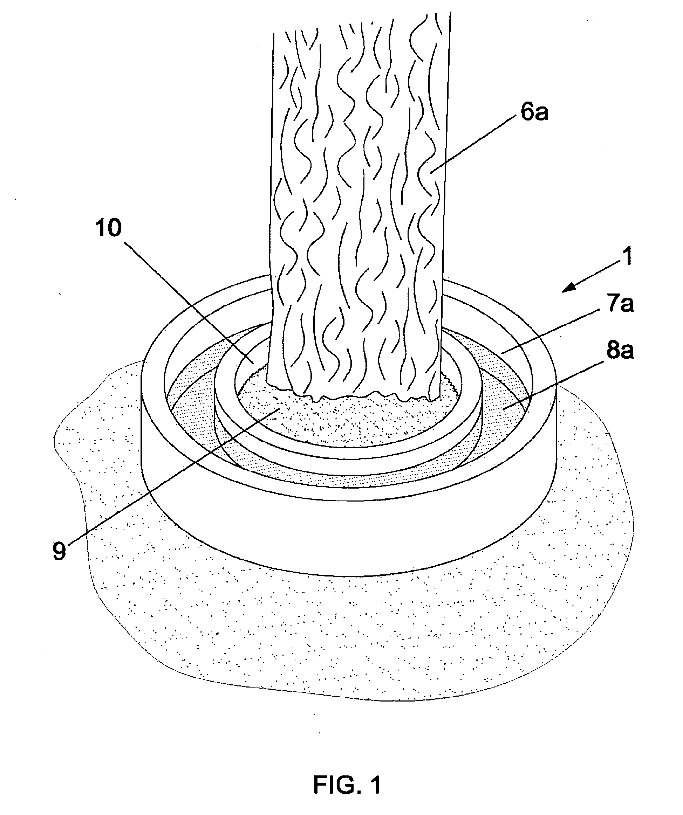

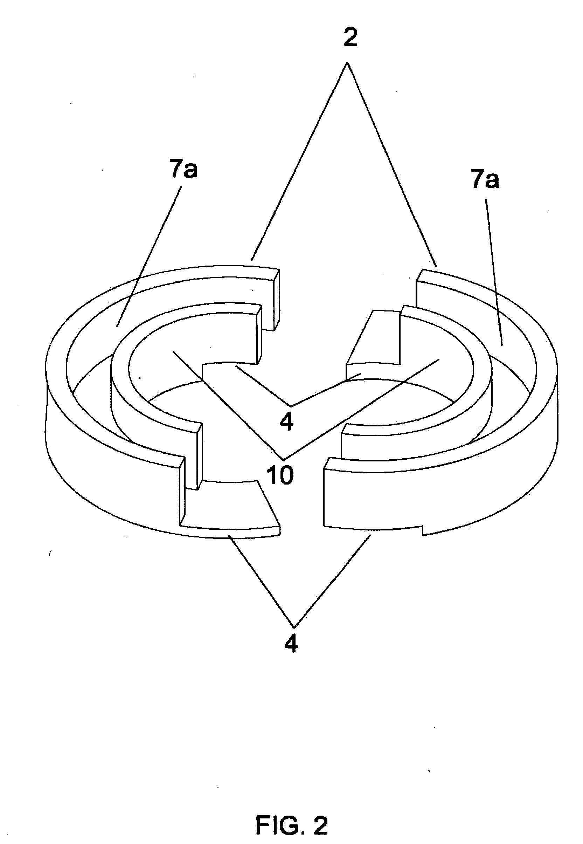

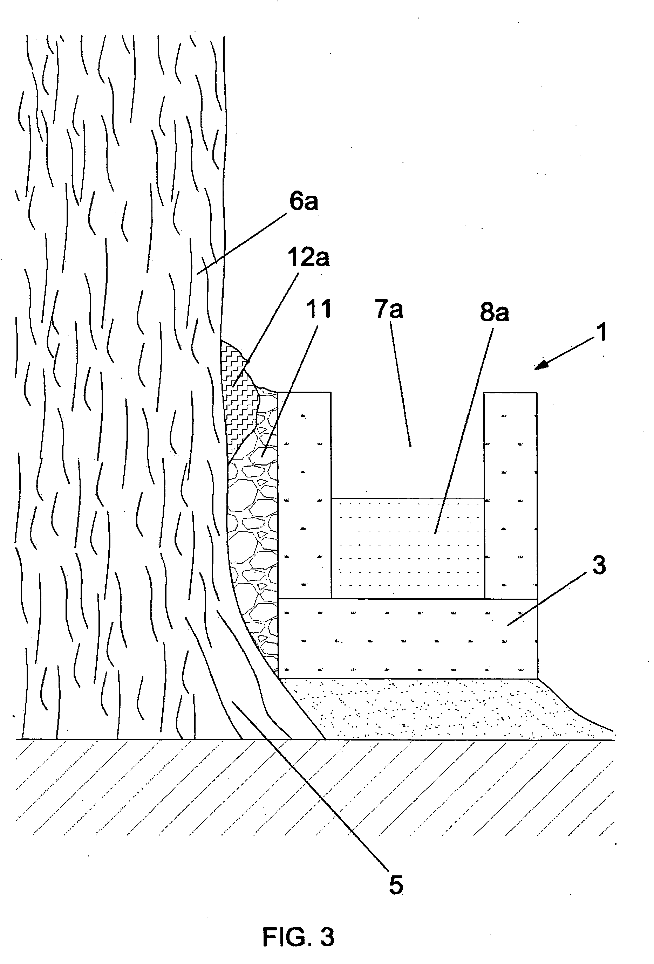

The object of the invention, which is illustrated in greater detail in figures 1, 2 and 3, comprises a ring-shaped piece (1) with an open top section, equipped with a receptacle (7a), said ring-shaped piece (1) being made from two rigid parts (2) with a U-shaped profile (3) assembled using a male-female connection (4).

The ring-shaped piece (1) is positioned at the base (5) of a tree trunk (6a). The receptacle (7a) contains a viscous fluid, preferably water (8a). The cavity (9) between the inner face (10) of the ring-shaped piece (1) and the trunk (6a) is filled in with filler materials, preferably pebbles (11), sand and/or earth. The irregularities in the bark of the tree are sealed with filler materials, preferably with dampened cellulose paper (12a).

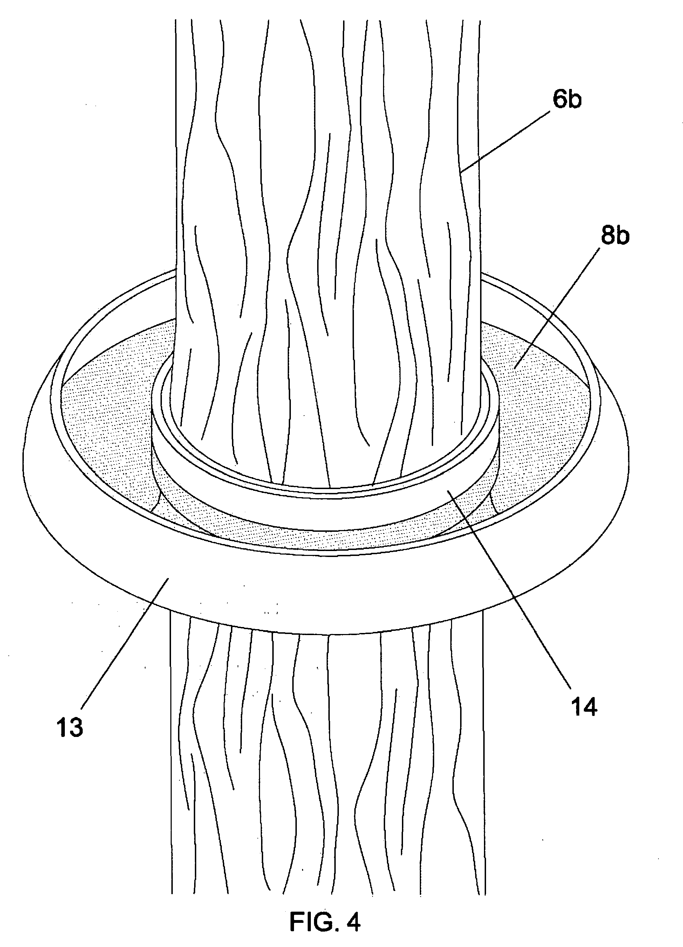

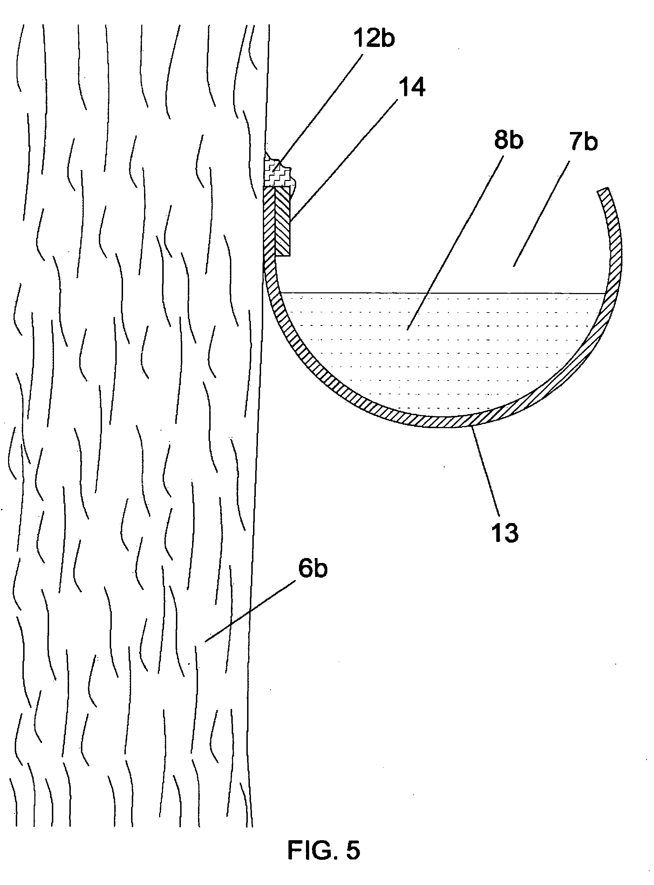

The embodiment which is not part of the invention is shown in figures 4 and 5.

It therefore has a ring-shaped piece (13) with an open top section, equipped with a receptacle (7b), said ring-shaped piece (13) being made from at least one section of elastic material, the ends of said section or sections being connected.

The section or sections of elastic material that make up the ring-shaped piece (13) are preferably portions of tubing.

Said elastic section or sections are positioned around the trunk (6b) of a tree and the ends of said section or sections are connected using an adhesive, preferably silicone, to form the ring-shaped piece (13), a viscous fluid, preferably water (8b), being poured into the receptacle (7b) where the caterpillars can be trapped.

The inside of the ring-shaped piece (13) is attached to the tree trunk (6b) at a suitable height to prevent the access of animals or children to said ring-shaped piece (13). Approximately 1.20 metres is considered a suitable height for this purpose.

The preferable means of attachment of the ring-shaped piece (13) to the trunk (6b) comprises an elastic means, preferably a tension band (14).

The cavity between the trunk (6b) and the ring-band connection is filled in with a sealing material, preferably dampened cellulose paper (12b).

## Claims

1. Caterpillar-trapping device for application to trees comprising a ring-shaped piece (1, 13) with an open top section, equipped with a receptacle (7a, 7b) that contains a viscous fluid wherein the caterpillars are trapped when they enter said receptacle (7a, 7b) and an intermediate means of connection and/or filling means between said ring-shaped piece (13) and the trunk (6a, 6b) of said tree, **characterised in that** the ring-shaped piece (13) comprises two rigid parts (2) assembled around a tree trunk (6a) with a male-female connection (4) using an adhesive material to ensure a certain degree of immobilisation and water-tightness.

2. Caterpillar-trapping device according to claim 1, **characterised in that** the intermediate means of connection and/or the filling means comprise products for filling in the cavity between the inner face of the ring-shaped piece (13) and the bark of the tree.

3. Caterpillar-trapping device according to claim 2, **characterised in that** the intermediate filling means comprises pebbles (11) and/or sand or earth.

4. Caterpillar-trapping device according to claims 2 or 3, **characterised in that** the intermediate means of connection and/or the filling means comprise dampened cellulose paper (12a, 12b).

## Patentansprüche

1. Vorrichtung zur Anbringung an Bäumen zum Einfangen von Raupen, bestehend aus einem ringförmigen Teil (1, 13), dessen Oberseite offen ist, ausgestattet mit einem Behälter (7a, 7b), welcher eine viskose Flüssigkeit enthält, in der die Raupen beim Eintritt in diesen Behälter (7a, 7b) festgehalten werden, sowie mit einem Zwischenstück zur Verbindung und/oder einem Instrument zum Ausfüllen des Bereichs zwischen dem vorstehend genannten ringförmigen Teil (13) und dem Baumstamm (6a, 6b), **dadurch gekennzeichnet, dass** das ringförmige Teil (13) aus zwei steifen Teilen (2) besteht, welche den Baumstamm (6a) anhand einer Steckverbindung (4) umschließen, wobei Klebematerial verwendet wird, um ein bestimmtes Maß an Fixierung und Dichtheit zu sichern.

2. Vorrichtung zum Einfangen von Raupen gemäß Patentanspruch 1, **dadurch gekennzeichnet, dass** das Zwischenstück zur Verbindung und/oder das Instrument zum Ausfüllen Produkte zum Ausfüllen des Hohlraums zwischen der Innenseite des ringförmigen Teils (13) und der Baurinde enthält.

3. Vorrichtung zum Einfangen von Raupen gemäß Patentanspruch 2, **dadurch gekennzeichnet, dass** das Zwischeninstrument zum Auffüllen Steinchen (11) und/oder Sand bzw. Erde enthält.

4. Vorrichtung zum Einfangen von Raupen gemäß Patentanspruch 2 oder 3, **dadurch gekennzeichnet, dass** das Zwischeninstrument zum Auffüllen feuchtes Zellulosepapier (12a, 12b) enthält.

## Revendications

1. Dispositif pour attraper des chenilles applicable aux arbres, comprenant une pièce en forme annulaire (1, 3) avec la partie supérieure ouverte, équipée d'un réceptacle (7a, 7b) qui contient un fluide visqueux dans lequel les chenilles sont attrapées lorsqu'elle rentrent dans ce réceptacle (7a, 7b) et une pièce intermédiaire de connexion et/ou instrument de remplissage entre cette pièce en forme annulaire (13) et le tronc (6a, 6b) de l'arbre, **caractérisée par**ce que la pièce annulaire (13) est formée de deux parties rigides (2) qui s'ajustent autour du tronc de l'arbre (6a) avec une connexion mâle-femelle (4) à travers l'usage de matériel adhésif pour garantir un certain degré d'immobilisation et d'herméticité.

2. Dispositif pour attraper des chenilles conformément à la revendication 1, **caractérisé par**ce que la pièce intermédiaire de connexion et/ou instrument de remplissage comprend des produits pour remplir la cavité entre la partie interne de la pièce en forme annulaire (13) et l'écorce de l'arbre.

3. Dispositif pour attraper des chenilles conformément à la revendication 2 **caractérisé par**ce que l'instrument intermédiaire de remplissage comprend des cailloux (11) et/ou du sable ou de la terre.

4. Dispositif pour attraper des chenilles conformément aux revendications 2 ou 3 **caractérisé par**ce que la pièce intermédiaire de connexion et/ou l'instrument de remplissage comprend du papier en cellulose humide (12a, 12b).
